# EUROPEAN PATENT SPECIFICATION

(11) **EP 3 080 222 B1**
(45) Date of publication and mention of the grant of the patent: **18.06.2025**
(21) Application number: 14868793.2
(22) Date of filing: 09.12.2014
(51) Int. Cl.: C09D 193/04, A01N 25/24, B27K 3/34

(54) **METHOD FOR TREATING WOOD, WOOD PRODUCT AND USE FIELD OF THE INVENTION**
VERFAHREN ZUR BEHANDLUNG VON HOLZ, HOLZPRODUKT UND VERWENDUNGSGEBIET DER ERFINDUNG
PROCÉDÉ DE TRAITEMENT DU BOIS, PRODUIT DE BOIS ET DOMAINE D'UTILISATION DE L'INVENTION

(30) Priority: 13.12.2013 FI 20136260
(43) Date of publication of application: 19.10.2016
(73) Proprietor: Honkarakenne OYJ, 04430 Järvenpää (FI)
(72) Inventor: KORPELA, Antti, 00350 Helsinki (FI)
(74) Representative: Papula Oy
(86) International application number: PCT/FI2014/050972
(87) International publication number: WO 2015/086902

(56) References cited:
- EP-A1- 0 056 876
- WO-A1-2014/114850
- WO-A1-87/06177
- GB-A- 1 515 036
- US-A- 2 768 910
- US-A1- 2005 136 278
- US-A1- 2005 186 352
- US-A1- 2009 304 939
- THI THANH ET AL: "Fixation of a Water-borne Copper Preservative in Wood by a Rosin Sizing Agent", 1 January 2012 (2012-01-01), XP055380667, Retrieved from the Internet <URL:http://www.swst.org/meetings/AM12/pdfs/papers/PS-38.pdf>
- NGUYEN THI THANH HIEN ET AL: "The combined effects of copper sulfate and rosin sizing agent treatment on some physical and mechanical properties of poplar wood", CONSTRUCTION AND BUILDING MATERIALS, ELSEVIER, NETHERLANDS, vol. 40, 4 December 2012 (2012-12-04), pages 33 - 39, XP028972483, ISSN: 0950-0618, DOI: 10.1016/J.CONBUILDMAT.2012.11.010
- DAHLEN, J. ET AL.: "Water Repellency and Dimensional Stability of Southern Pine Decking Treated with Waterborne Resin Acids", JOURNAL OF WOOD CHEMISTRY AND TECHNOLOGY, vol. 28, no. 1, 1 January 2008 (2008-01-01), pages 47 - 54, XP055348737, DOI: 10.1080/02773810801916472
- NGUYEN, T.T.H. ET AL.: "Micro-distribution and fixation of a rosin- based micronized-copper preservative in poplar wood", INTERNATIONAL BIODETERIORATION & BIODEGRADATION, vol. 83, 1 September 2013 (2013-09-01), pages 63 - 70, XP055348740, DOI: 10.1016/J.IBIOD.2013.02.017

## Description

### FIELD OF THE INVENTION

The invention relates to the method for treating wood as defined in the preamble of claim 1, to the wood product as defined in the preamble of claim 8, and to the use as defined in the preamble of claim 11.

### BACKGROUND OF THE INVENTION

Traditionally, so-called wood protection agents have been used for protecting wood. Wood protection agents usually contain an organic binder, such as rosin or varnish, an organic solvent, such as benzine, mineral oil, alcohol or water, and wax. In addition, agents that are toxic to micro-organisms have often been added to wood protection agents to inhibit for instance the growth of mold. Traditionally used wood protection agents are expensive and often contain organic solvents that are harmful to the environment and to people. The long period of time required for the binders to dry and, for instance, the autoignitability of varnish make the treatment of wood more difficult. Due to expensiveness of the treatments, the usability of traditional wood protection agents for short-term protection of wood products, for example for protection of wood products during storage, transportation and construction work, is reduced.

Also, water-repellency agents are applicable for protecting wood, which agents make the surface of wood water-repelling (FI122944 B). A water-repellency treatment prevents the wetting of wood when wood is exposed to liquid water, for example rain water. At the same time, microbial growth conditions in wood are also reduced. The weakness of water-repellency agents used for protecting wood is that they do not protect wood against microbial growth under conditions where the moisture content of wood is high because of high relative humidity, for example because of high relative humidity in the space where wood is stored.

### OBJECTIVE OF THE INVENTION

The objective of the present invention is to remedy the defects of the prior art described above. Specifically, the objective of the invention is to disclose an environmentally friendly and affordable method for treating wood, by means of which method the water-repellency of wood is improved and the growth of micro-organisms in wood is efficiently inhibited, also under conditions where relative humidity is high.

### SUMMARY OF THE INVENTION

The method for treating wood, the wood product and the use according to the invention are characterized by features disclosed in the claims.

In the method for treating wood according to the invention, a hydrophobation agent is applied onto the surface of untreated wood. An aqueous dispersion of fortified coniferous wood rosin or saponified coniferous wood rosin is used as the hydrophobation agent, and the coniferous wood rosin binds onto the surface of wood, forming onto the surface of wood a coniferous wood rosin coating, by means of which the water-repellency of the surface of wood is improved and penetration of micro-organisms, such as mold, algal and/or blue stain fungi, into the wood is mechanically inhibited.

In the method according to the invention, the coniferous wood rosin is applied onto the surface of wood, such as sawing products and wood products, as an aqueous dispersion. In one embodiment, the coniferous wood rosin is applied onto the surface of wood as a dilute aqueous dispersion. As the water dries, the coniferous wood rosin binds onto the surface of wood, whereby a coniferous wood rosin coating, improving the hydrophobicity, i.e. water-repellency, is formed on the surface of wood. In addition to improving the water-repellency, it was surprisingly found that a coniferous wood rosin coating forms a water-proof mechanical barrier to the penetration of the mycelia of mold, algal and blue stain fungi into wood fibers, and thereby to fungal growth. The coniferous wood rosin applied to the wood surface also reduces the penetration of water into wood, weakening the microbial growth conditions in this way as well. The treatment does not block the wood surface, but leaves it permeable to water vapor, i.e. breathing. The treatment does not affect the color of wood. The coniferous wood rosin applied to the surface of wood by the method according to the invention protects wood by the same mechanism as the resin-acid-containing resin of a tree, as the resin is secreted and hardened in injured parts of a living conifer. It is a new and surprising observation that a very small amount of coniferous wood rosin applied to the wood surface, for example 0.5 - 6 g/m², provides good protection against the growth of micro-organisms and discoloration caused thereby, as well as against wetting of wood. To obtain the intended effect, it is enough to have a thin coniferous wood rosin coating on the surface of wood.

In one embodiment, the coniferous wood rosin applied onto the surface of wood binds onto the surface of wood, forming a coniferous wood rosin coating onto the surface of wood in such a way that the coniferous wood rosin does not fill the pores of wood. The coniferous wood rosin applied onto the surface of wood does not impregnate the wood.

The effect of coniferous wood rosin as inhibitor of microbial growth is not based on toxicity of the coniferous wood rosin, but on a hardened coniferous wood rosin layer it forms, which layer stops the penetration of mold and fungal hyphae, and on increasing the water-repellency of wood. Wood protection treatments that are solely based on increasing the repellency of water in the form of drops and leave the surface of wood breathing do not provide a mechanical barrier to the penetration of mold and fungal hyphae into wood under conditions where favorable conditions for microbial activity are generated for example because the humidity is high.

The untreated wood means wood that is not chemically treated, i.e. no chemicals have been added thereto. In one embodiment, the untreated wood is wood treated by mechanical means, such as smoothed, planed or turned wood. The wood may be fresh wood or dried wood. The treatment can also be combined with drying of a wood product. According to one embodiment, the wood means a log, a planed log, a round log, a sawing product, such as unplaned or planed lumber, wood that has been planed to a shape, glued laminated timber, a glued laminated board, a plywood product, a chipboard, a fiberboard or laminated veneer lumber. The wood also refers to products manufactured from the materials mentioned above, such as roof trusses and pallets.

The hydrophobation agent means an agent by means of which the water-repellency of a surface is improved.

The applying means the provision of an aqueous dispersion of coniferous wood rosin onto the surface of wood by any known method, for example by wiping, rolling, spraying or dipping wood in the aqueous dispersion of coniferous wood rosin. The aqueous dispersion of coniferous wood rosin can also be poured onto the surface of wood.

The coniferous wood rosin means a resin-acid-containing composition extracted from conifers. The coniferous wood rosin contains compounds derived from conifers and synthesized therefrom by means of chemical modification, or mixtures of the compounds mentioned above. The coniferous wood rosin mainly consists of resin acids, such as abietic and pimaric acid. Aqueous dispersions of coniferous wood rosins are used in the paper industry in the rosin sizing of paper and paperboard, i.e. in hydrophobation of the surface of paper, i.e. in improving the water-repellency. The coniferous wood rosin may be for example colophonium, gum resin or tall oil resin. Tall oil resin is a side product generated in the sulfate pulp production process and formed as a result of distillation of raw tall oil. Coniferous wood rosins and their aqueous dispersions are commercially available. The wood rosin composition of commercial products depends on the origin of the coniferous wood rosin, the degree of purification, and chemicals used for modification as well as the degree of modification.

The method for treating wood according to the invention is economically very affordable. This is illustrated by the following calculation example: The price of a commercial wood rosin dispersion delivered at a concentration of 50 % is 1250 - 1500 euros / 1000 liters, i.e. 1.25 - 1.5 euros/liter. Excluding the price of water, the price of a wood rosin dispersion diluted to a concentration of 2 % is therefore 0.05 - 0.06 euros/liter. Assuming that a wood surface of 10 m² is treated with one liter, the chemical cost for the treatment of one square meter is 0.005 - 0.006 euros (0.5 - 0.6 euros /100 m²).

Fortified coniferous wood rosin (fortified gum rosin, fortified tall oil rosin) is coniferous wood rosin which is chemically modified with maleic or fumaric acid. Chemical modification improves the functionality of coniferous wood rosin in the hydrophobation of paper and paperboard. In one embodiment, the coniferous wood rosin is partially or fully fortified coniferous wood rosin. The coniferous wood rosin may also be coniferous wood rosin saponified with a base.

In one embodiment, water is allowed to evaporate after applying. The evaporation of water may be quickened by any method that quickens evaporation, for example by ventilation or heating. In addition to evaporating, water is also partially absorbed into the wood. The treatment is ready when the surface of wood has dried.

In one embodiment of the method according to the invention, the concentration of the aqueous dispersion of coniferous wood rosin is 0.1 - 60 weight-%. The concentration of the aqueous dispersion of coniferous wood rosin is selected according to the application method used. In one embodiment, the concentration of the aqueous dispersion of coniferous wood rosin is selected on the basis of the water absorbency of the wood. The water absorbency of wood indicates the capacity of wood to absorb the aqueous dispersion of coniferous wood rosin in connection with the treatment. In one embodiment, the concentration of the aqueous dispersion of coniferous wood rosin is selected according to the type of the wood.

In one embodiment, 0.1 - 20 g, more preferably 0.2 - 10 g and most preferably 0.5 - 5 g of coniferous wood rosin are applied per a wood surface of 1 m².

In one embodiment, the aqueous dispersion of coniferous wood rosin is applied by wiping, brushing, rolling or spraying the aqueous dispersion onto the wood surface or by dipping wood in the aqueous dispersion.

In one embodiment, the aqueous dispersion of coniferous wood rosin is applied by spraying and the concentration of the aqueous dispersion of coniferous wood rosin is 5 - 60 weight-% and more preferably 10 - 20 weight-%.

In one embodiment, the aqueous dispersion of coniferous wood rosin is applied by wiping, brushing, rolling or dipping and the concentration of the aqueous dispersion of coniferous wood rosin is 0.1 - 10 weight-%, more preferably 0.5 - 6 weight-% and most preferably 0.5 - 2.5 weight-%. In one embodiment, the concentration of the aqueous dispersion of coniferous wood rosin is 1.5 weight-%.

In one embodiment of the method according to the invention, 1 liter of the aqueous dispersion of coniferous wood rosin is applied per a wood surface of 3 - 50 m², more preferably 1 liter per a wood surface of 20 - 40 m². The amount of the aqueous dispersion of coniferous wood rosin being applied depends on the concentration of the coniferous wood rosin used.

The aqueous dispersion of coniferous wood rosin contains an agent that improves the stability of the aqueous dispersion. The aqueous dispersion of coniferous wood rosin contains one or more agents that improve the stability of the aqueous dispersion, which agents are selected from a group consisting of starch, cationic starch, a cationic synthetic polymer, an aliphatic amine and a copolymer of epichlorohydrin and dimethylamine. In one embodiment, the amount of the agent used for improving the stability of the aqueous dispersion is 0.01 - 20 weight-% and preferably 0.1 - 10 weight-%.

The aqueous dispersion of coniferous wood rosin contains a fixing agent that improves the binding of the coniferous wood rosin to wood, preferably aluminum sulfate. In one embodiment, the fixing agent that improves the binding of coniferous wood rosin to wood is polyaluminum chloride (PAC). In one embodiment, the fixing agent that improves the binding of coniferous wood rosin to wood is aluminum chloride (AlCl₃). The fixing agent may be any known fixing agent that improves the binding of coniferous wood rosin to wood. The amount of the fixing agent is typically 1/10 - 20/10 parts relative to the wood rosin. The fixing agent can also be applied onto the surface of wood in a separate step, for example before applying the aqueous dispersion of coniferous wood rosin to the wood surface.

In one embodiment, the aqueous dispersion of coniferous wood rosin contains an agent that inhibits the growth of micro-organisms, preferably iodo-2-propynyl butylcarbamate, tolylfluanid or pentachlorophenol and/or a derivative of pentachlorophenol.

Other active compounds may also be added to the aqueous dispersion of coniferous wood rosin, such as dyes or agents that improve photostability. An aqueous dispersion manufactured from saponified coniferous wood rosin may contain surface-active agents for emulsifying the saponified rosin in water. The amounts of the active additives are typically 0.01 - 10 weight-% and preferably 0.1 - 5 weight-%. The aqueous dispersion of wood rosin and the active compounds may also be separately applied to the surface of wood, for example in two separate application steps.

In one embodiment of the method according to the invention, the aqueous dispersion of coniferous wood rosin is applied to the surface of a round log or a planed log to prevent the cracking of the log.

Repeated wetting of a log with liquid water and subsequent drying, for example during construction work, increase the cracking of the log. When wetted, the wood swells, and as it dries, the wood shrinks. A log cracks because dimensional changes of the wood due to moisture are different in the tangential direction of the wood and in the radial direction of the wood. When a log is treated by the method according to the invention with an aqueous dispersion of coniferous wood rosin, the cracking of the log, when exposed to liquid water, is reduced as a lower moisture content is maintained in the wood. In one embodiment of the method according to the invention, only the end of the log is treated. The end of a log means the wood of the end face of a log, i.e. the sawn surface at the end of a log, or in a building the protruding ends of the logs of a crossed corner and the wood of the end face of the logs.

In the wood product manufactured from untreated wood according to the invention, a coniferous wood rosin coating formed by fortified coniferous wood rosin or saponified coniferous wood rosin is present on the surface of wood, which coating improves the water-repellency of the surface of wood and mechanically inhibits the penetration of micro-organisms into the wood.

In one embodiment of the wood product according to the invention, the wood contains 0.1 - 20 g, more preferably 0.2 - 10 g and most preferably 0.5 - 5 g of coniferous wood rosin per a wood surface of 1 m².

In one embodiment of the wood product according to the invention, the wood is a log, a sawing product, such as unplaned and planed lumber, wood that has been planed to a shape, glued laminated timber, a glued laminated board, a plywood product, a chipboard, a fiberboard, laminated veneer lumber or a product manufactured from these materials, such as a roof truss or a pallet. The log may be for example a planed log or a round log.

The use of an aqueous dispersion of fortified coniferous wood rosin or saponified coniferous wood rosin according to the invention as a coniferous wood rosin coating on the surface of untreated wood improves the water-repellency of the wood surface and inhibits the penetration of micro-organisms into the wood.

The method for treating wood according to the invention provides considerable advantages over the prior art. The coniferous wood rosin applied onto the surface of wood significantly improves the water-repellency of wood. The contact angle of water in the form of drops, i.e. the angle between a water drop and a surface, on a wood surface treated by the method according to the invention is greater than 90°. Water in the form of drops penetrates in the surface of wood very slowly or not at all. Due to the coniferous wood rosin coating, a water drop does not penetrate for example in the cross section of lumber treated by the method according to the invention, but over time evaporates from the surface of wood. However, when it comes to untreated wood, a water drop penetrates therein within a few minutes or even a few seconds. As the wetting of wood is reduced, the dimensional stability and strength of the wood are also improved. Due to reduced wetting, the increase of the weight of a wood product due to wetting is also reduced. The treatment also reduces the amount of dirt absorbed in the wood with water.

In addition, the coniferous wood rosin coating formed on the surface of wood forms a mechanical barrier inhibiting the penetration of mold and fungal mycelia into the wood. This inhibits the microbial activity also under conditions where relative humidity is high. However, the coniferous wood rosin coating on the wood surface does not block the surface of wood, but leaves it breathing, i.e. permeable to water vapor.

The coniferous wood rosin applied to the surface of wood produces a very good short-term protection, for example for the duration of construction work, against microbial growth and discoloration caused thereby, as well as against the wetting of wood. By means of the method for treating wood according to the invention, the susceptibility of different sawing and wood products, such as a log, to color changes caused by mold, algal and blue stain fungi can be significantly reduced. Thus, wood treated with an aqueous dispersion of coniferous wood rosin maintains the color of fresh wood considerably longer than untreated wood under conditions where the wood is exposed to water or high relative humidity. As the wood color is maintained unchanged during storage and construction work, the utility value of the wood is also maintained unchanged. Thus, the treatment according to the invention reduces the amount of discolored wood product rejects produced during construction work, as well as the need to clean the wood products, such as to smooth the wood surface.

The method for treating wood according to the invention is environmentally friendly, non-toxic and free of organic solvents. In addition, the method is fire-safe. The effect of coniferous wood rosin as inhibitor of microbial growth is not based on toxicity of the coniferous wood rosin, but on the hardened coniferous wood rosin layer it forms, stopping the penetration of mold and fungal hyphae, and on increasing the water-repellency of wood.

The method for treating wood according to the invention is simple and very affordable in terms of costs. It may therefore also be used for treating lumber that is cheaper in price, such as lumber used for transport pallets and packaging, and for temporary protection of wood products for example during transportation and construction work. Due to its efficiency and environmental friendliness, the method is also well applicable to the treatment of wood products with a high degree of processing, as it does not leave a noteworthy odor or color on the wood surface. Furthermore, the treatment does not increase the amount of compounds evaporating from the surface of wood, for example into the indoor air.

### DETAILED DESCRIPTION OF THE INVENTION

### Example 1

An aqueous dispersion of coniferous wood rosin, the concentration of which was 3 weight-%, was wiped onto the surface of a planed laminated pine log. In addition to the coniferous wood rosin, the aqueous dispersion contained a polymeric dispersing agent and PAC. The amount of water absorbed in the surface of the laminated pine log was approximately 0.1 liters / m². The surface of the laminated log was allowed to dry at room temperature, after which the water-repellency of the laminated log was examined by dropping water drops onto the surfaces of the laminated log, including the crosscut surface. The crosscut surfaces of laminated logs treated with an aqueous dispersion of coniferous wood rosin did not absorb water at all. The contact angle of water on these crosscut surfaces was greater than 110°. As to an untreated crosscut surface of a laminated reference log, the water drops absorbed therein within 60 - 120 seconds. The water drops absorbed slowly on the planed surfaces of the laminated log treated with the aqueous dispersion of coniferous wood rosin, which was seen as the darkening of wood under the water drop. Most of the water drops disappeared from the surfaces by evaporation. The absorption of water drops in the planed surface of the untreated laminated log was slow as well, but the water drops spread more on the untreated surface than on the treated surface.

### Example 2

An aqueous dispersion of coniferous wood rosin, the concentration of which was 3 weight-%, was wiped on the surface of a planed round pine log. In addition to the coniferous wood rosin, the aqueous dispersion contained a polymeric dispersing agent and PAC. The round log was wetted with water so as to simulate rain for 30 minutes, and the log was then allowed to dry overnight. The log was then wetted with water by the same method for 2 hours. When the round log had dried, the contact angle of a water drop on the planed surface of the round log and on the crosscut surface of the round log was measured. Based on the contact angle measurements for a water drop, wetting of the round log did not decrease the effect of the coniferous wood rosin treatment. The contact angle of water drops was greater than 110° on the crosscut surfaces of the round log before the first wetting and after the second wetting and approximately 90 - 100° on the planed surfaces.

### Example 3

An aqueous dispersion of coniferous wood rosin, the concentration of which was 3 weight-%, was wiped on the surface of a planed pine board. In addition to the coniferous wood rosin, the aqueous dispersion contained a polymeric dispersing agent and PAC. When the surface of the pine board had dried, the board treated with an aqueous dispersion of coniferous wood rosin and an untreated board were placed outdoors in a shady place, exposing the boards to rain and changes of humidity. The purpose of placement in a shady place was to prevent graying of the samples due to UV light from the sun, as well as the difficulties in interpreting the results due to graying. The period of examination was 3 months from the start of June to the end of August (Espoo, Finland). The pine board treated with an aqueous dispersion of coniferous wood rosin kept its original color clearly longer than the untreated pine board. Color changes caused by mold and blue stain fungi were visible on the surface of the untreated pine board within approximately 2 months of the start of the test. The color differences between the surfaces of the boards were particularly clear when the boards were wetted by rain.

### Example 4

The sides of a planed laminated log were treated with an aqueous dispersion of coniferous wood rosin, the concentration of which was 0.75 weight-%. The crosscut surfaces of the laminated log, on the other hand, were treated with an aqueous dispersion of coniferous wood rosin, the concentration of which was 3.0 weight-%. The aqueous dispersions of coniferous wood rosin used in the tests were prepared by diluting Fennosize RN 31/42 coniferous rosin (Kemira) with water to a concentration of 0.75 weight-% or 3.0 weight-%. The aqueous dispersion of coniferous wood rosin was applied onto the surface of wood by spraying the aqueous dispersion to the surface of wood with a manual sprayer. When the surface of the laminated log had dried, the laminated log treated with an aqueous dispersion of coniferous wood rosin and an untreated laminated log were placed outdoors where the laminated logs were exposed to sunlight, rain and changes of humidity. The period of examination was 3 months from the start of June to the end of August (Lahti, Finland). The laminated log treated with an aqueous dispersion of coniferous wood rosin kept its original color clearly longer than the untreated laminated log. Color changes caused by mold and blue stain fungi were visible on the surface of the untreated laminated log within approximately 2 months of the start of the test. The color differences between the surfaces of the laminated logs were particularly clear when the laminated logs were wetted by rain.

### Example 5

An aqueous dispersion of coniferous wood rosin, the concentration of which was 3 weight-%, was wiped on the surfaces of a planed pine board. In addition to the coniferous wood rosin, the aqueous dispersion contained cationized starch as a dispersing agent for the coniferous wood rosin. The surfaces of another planed pine board were wiped with an aqueous dispersion of coniferous wood rosin, the concentration of which was 3 weight-% as well. In addition to the coniferous wood rosin, the aqueous dispersion contained, as a dispersing agent, cationized starch and also alum (ALG Aluminium Sulfate, i.e. aluminium sulfate 14-hydrate, Kemira) in an amount of 1.5 weight-%. The pine boards were wetted with water so as to simulate rain for 30 minutes, after which the boards were allowed to dry overnight. Then, the boards were wetted with water by the same method for 2 hours. When the boards had dried, the contact angle of a water drop on the planed surface of the boards and on the crosscut surface of the boards was measured. With alum added to the aqueous dispersion of coniferous wood rosin, the contact angle of water drops was greater than 110° on the crosscut surfaces of the boards before the first wetting and after the second wetting and approximately 90 - 100° on the planed surfaces. With no alum added to the aqueous dispersion of coniferous wood rosin, the contact angle of water drops was clearly smaller than 110° on the crosscut surfaces of the pine boards before the first wetting and after the second wetting and approximately 90 - 100° on the planed surfaces. On the basis of the test result, the addition of alum improved the effect of coniferous wood rosin especially on the crosscut surfaces of the pine boards.

### Example 6

An aqueous dispersion of coniferous wood rosin, the concentration of which was 3.0 weight-%, was wiped on the surface of a planed round pine log. The aqueous dispersion of coniferous wood rosin used in the tests was prepared by diluting Hi-pHase 40D coniferous wood rosin (Ashland Finland) with water to a concentration of 3.0 weight-%. 1.5 weight-% of alum (ALG Aluminium Sulfate, i.e. aluminium sulfate 14-hydrate, Kemira) was added to the dispersion. The amount of water absorbed in the surface of the round log was approximately 0.1 liters / m². The surface of the round log was allowed to dry at room temperature, after which the water-repellency of the round log was examined by dropping water drops onto the crosscut surface of the round log. The contact angle of water on the treated crosscut surface was 90-100°. The contact angle of water on the crosscut surface of an untreated round reference log was clearly smaller than 90°. The water drops absorbed in the untreated surface within 60 - 120 seconds. The round log was wetted with water so as to simulate rain for 30 minutes, and the round log was then allowed to dry overnight. The round log was then wetted with water by the same method for 2 hours. When the round log had dried, the contact angle of a water drop on the crosscut surface of the round log was measured. Based on the contact angle measurements for a water drop, wetting of the round log did not decrease the effect of the coniferous wood rosin treatment. The contact angle of water drops was greater than 110° on the crosscut surfaces of the round log after the second wetting, i.e. slightly greater than before the first wetting.

## Claims

1. A method for treating wood, in which method a hydrophobation agent is applied onto the surface of untreated wood, **characterized in that** an aqueous dispersion of fortified coniferous wood rosin or saponified coniferous wood rosin is used as the hydrophobation agent, and the coniferous wood rosin binds onto the surface of wood, forming onto the surface of wood a coniferous wood rosin coating, which leaves the wood surface permeable to water vapor and by means of which the water-repellency of the surface of wood is improved and penetration of micro-organisms, such as mold, algal and/or blue stain fungi, into the wood is mechanically inhibited, and wherein the aqueous dispersion of coniferous wood rosin contains one or more agents that improve the stability of the aqueous dispersion, which agents are selected from a group consisting of starch, cationic starch, a cationic synthetic polymer, an aliphatic amine and a copolymer of epichlorohydrin and dimethylamine, and wherein the aqueous dispersion of coniferous wood rosin contains a fixing agent that improves the binding of the coniferous wood rosin to wood, wherein the fixing agent is aluminum sulfate or polyaluminum chloride.

2. The method according to claim 1, **characterized in that** after applying, water is allowed to evaporate.

3. The method according to any one of claims 1-2, **characterized in that** the concentration of the aqueous dispersion of coniferous wood rosin is 0.1 - 60 weight-%.

4. The method according to any one of claims 1-3, **characterized in that** 0.1 - 20 g, more preferably 0.2 - 10 g and most preferably 0.5 - 5 g of coniferous wood rosin are applied per a wood surface of 1 m².

5. The method according to any one of claims 1-4, **characterized in that** the aqueous dispersion of coniferous wood rosin is applied by wiping, brushing, rolling or spraying the aqueous dispersion onto the wood surface or by dipping wood in the aqueous dispersion.

6. The method according to any one of claims 1-5, **characterized in that** the aqueous dispersion of coniferous wood rosin contains an agent that inhibits the growth of micro-organisms, preferably iodo-2-propynyl butylcarbamate, tolylfluanid or pentachlorophenol and/or a derivative of pentachlorophenol.

7. The method according to any one of claims 1-6, **characterized in that** the aqueous dispersion of coniferous wood rosin is applied to the surface of a round log or a planed log to prevent the cracking of the log.

8. A wood product manufactured from untreated wood, **characterized in that** a coniferous wood rosin coating formed by fortified coniferous wood rosin or saponified coniferous wood rosin is present on the surface of wood, which coating leaves the wood surface permeable to water vapor and improves the water-repellency of the surface of wood and mechanically inhibits the penetration of micro-organisms into the wood, and wherein the coniferous wood rosin coating is formed by an aqueous dispersion of coniferous wood rosin that contains one or more agents that improve the stability of the aqueous dispersion, which agents are selected from a group consisting of starch, cationic starch, a cationic synthetic polymer, an aliphatic amine and a copolymer of epichlorohydrin and dimethylamine, and wherein the aqueous dispersion of coniferous wood rosin contains a fixing agent that improves the binding of the coniferous wood rosin to wood, wherein the fixing agent is aluminum sulfate or polyaluminum chloride.

9. The wood product according to claim 8, **characterized in that** the wood contains 0.1 - 20 g, more preferably 0.2 - 10 g and most preferably 0.5 - 5 g of the coniferous wood rosin per a wood surface of 1 m².

10. The wood product according to claims 8 or 9, **characterized in that** the wood is a log, a sawing product, such as unplaned and planed lumber, wood that has been planed to a shape, glued laminated timber, a glued laminated board, a plywood product, a chipboard, a fiberboard, laminated veneer lumber or a product manufactured from these materials.

11. Use of an aqueous dispersion of fortified coniferous wood rosin or saponified coniferous wood rosin as a coniferous wood rosin coating on the surface of untreated wood to improve the water-repellency of the wood surface and to inhibit the penetration of micro-organisms into the wood while leaving the wood surface permeable to water vapor, and wherein the aqueous dispersion of coniferous wood rosin contains one or more agents that improve the stability of the aqueous dispersion, which agents are selected from a group consisting of starch, cationic starch, a cationic synthetic polymer, an aliphatic amine and a copolymer of epichlorohydrin and dimethylamine, and wherein the aqueous dispersion of coniferous wood rosin contains a fixing agent that improves the binding of the coniferous wood rosin to wood, wherein the fixing agent is aluminum sulfate or polyaluminum chloride.

## Patentansprüche

1. Verfahren zur Behandlung von Holz, wobei bei dem Verfahren ein Hydrophobierungsmittel auf die Oberfläche von unbehandeltem Holz aufgetragen wird, **dadurch gekennzeichnet, dass** eine wässrige Dispersion von angereichertem Nadelholzkolophonium oder verseiftem Nadelholzkolophonium als Hydrophobierungsmittel verwendet wird, und das Nadelholzkolophonium an die Oberfläche von Holz bindet und auf der Oberfläche von Holz eine Nadelholzkolophoniumbeschichtung bildet, die die Holzoberfläche durchlässig für Wasserdampf macht und durch die das Wasserabweisungsvermögen der Oberfläche von Holz verbessert wird und Eindringen von Mikroorganismen, wie z.B. Schimmel, Algen und/oder Bläuepilze in das Holz mechanisch inhibiert wird, und wobei die wässrige Dispersion von Nadelholzkolophonium ein oder mehrere Mittel enthält, die die Stabilität der wässrigen Dispersion verbessern, wobei die Mittel aus einer Gruppe bestehend aus Stärke, kationischer Stärke, einem kationischen synthetischen Polymer, einem aliphatischen Amin und einem Copolymer aus Epichlorhydrin und Dimethylamin ausgewählt sind, und wobei die wässrige Dispersion von Nadelholzkolophonium ein Fixiermittel enthält, das das Binden von dem Nadelholzkolophonium an Holz verbessert, wobei das Fixiermittel Aluminiumsulfat oder Polyaluminiumchlorid ist.

2. Verfahren gemäß Anspruch 1, **dadurch gekennzeichnet, dass** nach dem Auftragen Wasser verdampfen kann.

3. Verfahren gemäß einem der Ansprüche 1-2, **dadurch gekennzeichnet, dass** die Konzentration der wässrigen Dispersion von Nadelholzkolophonium 0,1 - 60 Gew.-% beträgt.

4. Verfahren gemäß einem der Ansprüche 1-3, **dadurch gekennzeichnet, dass** 0,1 - 20 g, bevorzugter 0,2 - 10g und am meisten bevorzugt 0,5 - 5g von Nadelholzkolophonium pro Holzoberfläche von 1 m² aufgetragen werden.

5. Verfahren gemäß einem der Ansprüche 1-4, **dadurch gekennzeichnet, dass** die wässrige Dispersion von Nadelholzkolophonium durch Wischen, Streichen, Rollen oder Sprühen der wässrigen Dispersion auf die Holzoberfläche oder durch Tauchen von Holz in die wässrige Dispersion aufgebracht wird.

6. Verfahren gemäß einem der Ansprüche 1-5, **dadurch gekennzeichnet, dass** die wässrige Dispersion von Nadelholzkolophonium ein Mittel enthält, dass das Wachstum von Mikroorganismen inhibiert, vorzugsweise lod-2-Propinylbutylcarbamat, Tolylfluanid oder Pentachlorphenol und/oder ein Derivat von Pentachlorphenol.

7. Verfahren gemäß einem der Ansprüche 1-6, **dadurch gekennzeichnet, dass** die wässrige Dispersion von Nadelholzkolophonium auf die Oberfläche eines Rundholzes oder eines gehobelten Stammes aufgetragen wird, um das Zersplittern des Stammes zu verhindern.

8. Holzprodukt, hergestellt aus unbehandeltem Holz, **dadurch gekennzeichnet, dass** eine Nadelholzkolophoniumbeschichtung, die aus angereichertem Nadelholzkolophonium oder verseiftem Nadelholzkolophonium gebildet ist, auf der Oberfläche von Holz vorhanden ist, wobei die Beschichtung die Holzoberfläche durchlässig für Wasserdampf macht und das Wasserabweisungsvermögen der Oberfläche des Holzes verbessert und das Eindringen von Mikroorganismen in das Holz mechanisch inhibiert, und wobei die Nadelholzkolophoniumbeschichtung durch eine wässrige Dispersion von Nadelholzkolophonium, das ein oder mehrere Mittel enthält, die die Stabilität der wässrigen Dispersion verbessern, gebildet ist, wobei die Mittel aus einer Gruppe bestehend aus Stärke, kationischer Stärke, einem kationischen synthetischen Polymer, einem aliphatischen Amin und einem Copolymer aus Epichlorhydrin und Dimethylamin ausgewählt sind, und wobei die wässrige Dispersion von Nadelholzkolophonium ein Fixiermittel enthält, das das Binden des Nadelholzkolophoniums an Holz verbessert, wobei das Fixiermittel Aluminiumsulfat oder Polyaluminiumchlorid ist.

9. Holzprodukt gemäß Anspruch 8, **dadurch gekennzeichnet, dass** das Holz 0,1 - 20g, bevorzugter 0,2 - 10g und am meisten bevorzugt 0,5 - 5g des Nadelholzkolophoniums pro Holzoberfläche von 1 m² enthält.

10. Holzprodukt gemäß Anspruch 8 oder 9, **dadurch gekennzeichnet, dass** das Holz ein Stamm, ein Sägeprodukt, wie ungehobeltes und gehobeltes Schnittholz, Holz, das in eine Form gehobelt wurde, verleimtes Schichtholz, eine verleimte Schichtplatte, ein Sperrholzprodukt, eine Spanplatte, eine Faserplatte, laminiertes Furnierholz oder ein Produkt, das aus diesen Materialien hergestellt wurde, ist.

11. Verwendung einer wässrigen Dispersion von angereichertem Nadelholzkolophonium oder verseiftem Nadelholzkolophonium als eine Nadelholzkolophoniumbeschichtung auf der Oberfläche von unbehandeltem Holz zur Verbesserung des Wasserabweisungsvermögens der Holzoberfläche und zur Inhibition des Eindringens von Mikroorganismen in das Holz, während die Holzoberfläche durchlässig für Wasserdampf bleibt, und wobei die wässrige Dispersion von Nadelholzkolophonium ein oder mehrere Mittel enthält, die die Stabilität der wässrigen Dispersion verbessern, wobei die Mittel aus einer Gruppe bestehend aus Stärke, kationischer Stärke, einem kationischen synthetischen Polymer, einem aliphatischen Amin und einem Copolymer aus Epichlorhydrin und Dimethylamin ausgewählt sind, und wobei die wässrige Dispersion von Nadelholzkolophonium ein Fixiermittel enthält, das die Bindung des Nadelholzkolophoniums an Holz verbessert, wobei das Fixiermittel Aluminiumsulfat oder Polyaluminiumchlorid ist.

## Revendications

1. Procédé de traitement du bois, dans lequel procédé un agent d'hydrophobation est appliqué sur la surface du bois non traité, **caractérisé en ce qu'**une dispersion aqueuse de colophane de conifères fortifiée ou de colophane de conifères saponifiée est utilisée en tant qu'agent d'hydrophobation, et la colophane de conifères se lie sur la surface du bois, formant sur la surface du bois un revêtement de colophane de conifères, qui laisse la surface du bois perméable à la vapeur d'eau et au moyen duquel l'hydrophobie de la surface du bois est améliorée et la pénétration de micro-organismes, tels que moisissures, algues et/ou champignons du bleuissement, dans le bois est mécaniquement empêchée, et dans lequel la dispersion aqueuse de colophane de conifères contient un ou plusieurs agents qui améliorent la stabilité de la dispersion aqueuse, lesquels agents sont sélectionnés dans un groupe consistant en amidon, amidon cationique, un polymère synthétique cationique, une amine aliphatique et un copolymère d'épichlorhydrine et de diméthylamine, et dans lequel la dispersion aqueuse de colophane de conifères contient un agent de fixation qui améliore la liaison de la colophane de conifères au bois, dans lequel l'agent de fixation est du sulfate d'aluminium ou du polychlorure d'aluminium.

2. Procédé selon la revendication 1, **caractérisé en ce que**, après l'application, de l'eau est autorisée à s'évaporer.

3. Procédé selon l'une quelconque des revendications 1 à 2, **caractérisé en ce que** la concentration de la dispersion aqueuse de colophane de conifères est 0,1 à 60 % en poids.

4. Procédé selon l'une quelconque des revendications 1 à 3, **caractérisé en ce que** 0,1 à 20 g, plus préférablement 0,2 à 10 g et le plus préférentiellement 0,5 à 5 g de colophane de conifères sont appliqués par surface de bois de 1 m².

5. Procédé selon l'une quelconque des revendications 1 à 4, **caractérisé en ce que** la dispersion aqueuse de colophane de conifères est appliquée par essuyage, brossage, laminage ou pulvérisation de la dispersion aqueuse sur la surface du bois ou par trempage du bois dans la dispersion aqueuse.

6. Procédé selon l'une quelconque des revendications 1 à 5, **caractérisé en ce que** la dispersion aqueuse de colophane de conifères contient un agent qui empêche la croissance de micro-organismes, préférablement io-do-2-propynyl butylcarbamate, tolylfluanide ou pentachlorophénol et/ou un dérivé de pentachlorophénol.

7. Procédé selon l'une quelconque des revendications 1 à 6, **caractérisé en ce que** la dispersion aqueuse de colophane de conifères est appliquée à la surface d'un rondin rond ou un rondin raboté pour empêcher la fissuration du rondin.

8. Produit de bois fabriqué à partir du bois non traité, **caractérisé en ce qu'**un revêtement de colophane de conifères formé par de la colophane de conifères fortifiée ou de la colophane de conifères saponifiée est présent sur la surface du bois, lequel revêtement laisse la surface du bois perméable à la vapeur d'eau et améliore l'hydrophobie de la surface du bois et empêche mécaniquement la pénétration de micro-organismes dans le bois, et dans lequel le revêtement de colophane de conifères est formé par une dispersion aqueuse de colophane de conifères qui contient un ou plusieurs agents qui améliorent la stabilité de la dispersion aqueuse, lesquels agents sont sélectionnés dans un groupe consistant en amidon, amidon cationique, un polymère synthétique cationique, une amine aliphatique et un copolymère d'épichlorhydrine et de diméthylamine, et dans lequel la dispersion aqueuse de colophane de conifères contient un agent de fixation qui améliore la liaison de la colophane de conifères au bois, dans lequel l'agent de fixation est du sulfate d'aluminium ou du polychlorure d'aluminium.

9. Produit de bois selon la revendication 8, **caractérisé en ce que** le bois contient 0,1 à 20 g, plus préférablement 0,2 à 10 g et le plus préférentiellement 0,5 à 5 g de la colophane de conifères par surface de bois de 1 m².

10. Produit de bois selon les revendications 8 ou 9, **caractérisé en ce que** le bois est un rondin, un produit dérivé du sciage, tel que du bois d'oeuvre non raboté et raboté, du bois qui a été raboté selon une forme, du bois de charpente stratifié collé, une planche stratifiée collée, un produit de contreplaqué, un panneau de particules, un panneau de fibres, du bois de placage stratifié ou un produit fabriqué à partir de ces matériaux.

11. Utilisation d'une dispersion aqueuse de colophane de conifères fortifiée ou de colophane de conifères saponifiée en tant que revêtement de colophane de conifères sur la surface de bois non traité pour améliorer l'hydrophobie de la surface du bois et pour empêcher la pénétration de micro-organismes dans le bois tout en laissant la surface du bois perméable à la vapeur d'eau, et dans lequel la dispersion aqueuse de colophane de conifères contient un ou plusieurs agents qui améliorent la stabilité de la dispersion aqueuse, lesquels agents sont sélectionnés dans un groupe consistant en amidon, amidon cationique, un polymère synthétique cationique, une amine aliphatique et un copolymère d'épichlorhydrine et de diméthylamine, et dans lequel la dispersion aqueuse de colophane de conifères contient un agent de fixation qui améliore la liaison de la colophane de conifères au bois, dans lequel l'agent de fixation est du sulfate d'aluminium ou du polychlorure d'aluminium.
